(19) Europäisches Patentamt
European Patent Office
Office européen des brevets

(11) **EP 2 358 555 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(51) Int Cl.:
*B60K 6/48* *(2007.10)*   *B60W 20/00* *(2006.01)*
*B60W 50/06* *(2006.01)*

(21) Anmeldenummer: **09744998.7**

(22) Anmeldetag: **16.10.2009**

(86) Internationale Anmeldenummer:
**PCT/EP2009/063557**

(87) Internationale Veröffentlichungsnummer:
**WO 2010/057727 (27.05.2010 Gazette 2010/21)**

(54) **VERFAHREN ZUR DREHZAHLREGELUNG**

METHOD FOR REGULATING A ROTATIONAL SPEED

PROCÉDÉ DE RÉGULATION DE LA VITESSE DE ROTATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.11.2008 DE 102008043980**

(43) Veröffentlichungstag der Anmeldung:
**24.08.2011 Patentblatt 2011/34**

(73) Patentinhaber: **Robert Bosch GmbH**
**70442 Stuttgart (DE)**

(72) Erfinder: **SEEL, Andreas**
**71282 Hemmingen (DE)**

(56) Entgegenhaltungen:
**EP-A- 0 965 475       EP-A- 1 439 087**
**DE-A1-102006 010 223   DE-A1-102007 016 513**

## Beschreibung

Stand der Technik

Die vorliegende Erfindung betrifft die Drehzahlregelung in einem Hybridantrieb.

In konventionellen Fahrzeugantrieben mit nur einem Verbrennungsmotor werden zur Drehzahlregelung Gerätesteuerungen eingesetzt, welche nach einem Anlassen des Verbrennungsmotors dessen Drehzahl auf der Basis einer Differenz zwischen einer. Soll-Drehzahl und einer Ist-Drehzahl regeln, wie es beispielsweise in der Druckschrift DE 600 15 820 T2 beschrieben ist. Eine derartige Drehzahlregelung ist jedoch zur Ausregelung von Drehzahlschwingungen, welche beispielsweise beim Einkuppeln eines Verbrennungsmotors in einen Hybridantrieb aufgrund von schnell aufeinander folgenden Drehzahländerungen nicht geeignet.

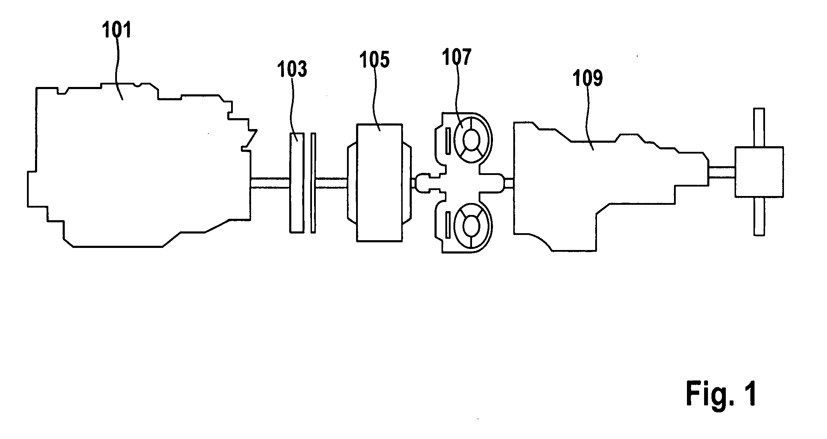

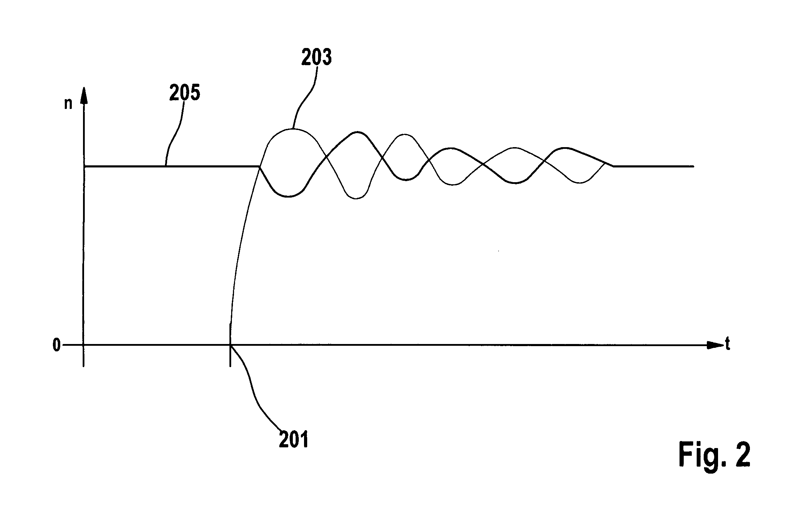

Die EP-A-0 985 475 offenbart ein Verfahren zur Drehzahlregelung in einem Hybridantrieb eines Fahrzeugs mit einer ersten Antriebsquelle, insbesondere einem Verbrennungsmotor (1), und einer zweiten Antriebsquelle, insbesondere einem Elektromotor (3), mit: Bestimmen einer Drehzahlgrösse, welche von einer Drehzahl der ersten Antriebsquelle und einer Drehzahl der zweiten Antriebsquelle abhängig ist (Differenz der Drehzahlen, Absatz 28, 29, Figur 1 und 2); und Regeln (303) der Drehzahl der ersten Antriebsquelle oder der Drehzahl der zweiten Antriebsquelle auf der Basis der Drehzahlgrösse zur Schwingungsreduktion. Die Regelung erfolgt durch Verändern des Generatormoments tPg in Abhängigkeit vom Drehzahlunterschied.

Figur 1 zeigt beispielhaft einen Triebstrang eines Hybridfahrzeugs mit einem Verbrennungsmotor 101, welcher mittels einer Trennkupplung 103 mit einem Elektromotor koppelbar ist. Der Triebstrang umfasst ferner einen dem Elektromotor 105 nachgeordneten Drehmomentenwandler 107 sowie ein Verteilergetriebe 109. Die Trennkupplung 103 umfasst zur Drehschwingungsdämpfung üblicherweise eine oder mehrere Bogenfedern, welche bei einem schnellen Schließen der Trennkupplung 103 zum Anlassen des Verbrennungsmotors 101 komprimiert werden. Dadurch wird eine Drehschwingung zwischen dem Verbrennungsmotor 101 und dem Elektromotor 105 angeregt, welche sich durch starke Momentenausschläge eines Drehzahlreglers negativ auf die Drehzahlregelung auswirken können. Diese Schwingungen weisen darüber hinaus eine Frequenz auf, welche zu hoch ist, um eine effiziente Ausregelung der Drehschwingungen unter anderem wegen der Antriebsträgheit zuzulassen, sodass die vorgenannten Momentenausschläge des Drehzahlreglers sich besonders stark auswirken können.

Fig. 2 zeigt beispielsweise einen Verlauf der Drehzahlschwingungen, welche beim Schließen der Trennkupplung 103 zum Zeitpunkt 201 entstehen. Der Verlauf 203 verdeutlicht einen Drehzahlverlauf des Verbrennungsmotors, während der Verlauf 205 eine Drehzahl des Elektromotors zeigt. In Fig. 2 ist deutlich zu erkennen, dass nach einem Schließen der Trennkupplung 103 sowohl die Drehzahl des Elektromotors 105 als auch die Drehzahl des Verbrennungsmotors 101 schwingen. Diese Schwingungen können auf der Basis eines einzigen festen Sollwertes jedoch nicht effizient ausgeregelt werden.

Offenbarung der Erfindung

Die Erfindung basiert auf der Erkenntnis, dass in einem Hybridantrieb mit zumindest zwei Antriebsquellen die Drehzahl der jeweiligen Antriebsquelle in vorteilhafter Weise auf der Basis einer von den Drehzahlen beider Aggregate abhängigen Größe, beispielsweise auf der Basis eines Mittelwertes zwischen den Drehzahlen beider Aggregate, geregelt werden kann. Dadurch wird eine Drehzahlregelgüte verbessert, so dass insbesondere eine Startphase eines Verbrennungsmotors komfortabler gestaltet werden kann. Ferner können hohe Momentenausschläge durch den Drehzahlregler vermieden werden, so dass ein Einkuppeln eines Verbrennungsmotors ruckfreier gestaltet werden kann.

Gemäß einem Aspekt betrifft die Erfindung ein Verfahren zur Drehzahlregelung in einem Hybridantrieb eines Fahrzeugs mit einer ersten Antriebsquelle, beispielsweise einem Verbrennungsmotor, und einer zweiten Antriebsquelle, beispielsweise einem Elektromotor. Das Verfahren umfasst das Bestimmen einer Drehzahlgröße, welche von einer Drehzahl der ersten Antriebsquelle und einer Drehzahl der zweiten Antriebsquelle abhängig ist, und Regeln einer Drehzahl der ersten Antriebsquelle und/oder einer Drehzahl der zweiten Antriebsquelle auf der Basis der Drehzahlgröße zur Schwingungsreduktion.

Erfindungsgemäß ist die Drehzahlgröße ein Mittelwert, beispielsweise ein arithmetischer oder ein gewichteter Mittelwert, zwischen der Drehzahl der ersten Antriebsquelle und der Drehzahl der zweiten Antriebsquelle. Dadurch kann die Bestimmung der Drehzahlgröße in vorteilhafter Weise besonders einfach durchgeführt werden.

Gemäß einer Ausführungsform kann die erste Antriebsquelle an einen Antriebsstrang, welcher durch die zweite Antriebsquelle angetrieben wird, beispielsweise mittels einer Trennkupplung eingekuppelt werden. Die Regelung der Drehzahl auf der Basis der Drehzahlgröße kann daher insbesondere beim Einkuppeln der ersten Antriebsquelle an den Antriebsstrang des Fahrzeugs durchgeführt werden. Dadurch wird in vorteilhafter Weise sichergestellt, dass den während des Einkuppelvorgangs auftretenden Drehzahlschwingungen schnell entgegengewirkt werden kann.

Gemäß einer Ausführungsform wird zur Bestimmung der Drehzahlgröße die Drehzahl der ersten Antriebsquelle mit einer Drehträgheit der ersten Antriebsquelle verknüpft. Zusätzlich oder alternativ kann bei der Bestimmung der Drehzahlgröße die Drehzahl der zweiten Antriebsquelle mit einer Drehträgheit der zweiten Antriebsquelle verknüpft werden. Bei den Verknüpfungen kann es sich beispielsweise um Gewichtungen handeln, wobei beispielsweise die jeweiligen Drehzahlwerte mit einem auf die jeweilige Drehträgheit hinweisenden Faktor gewichtet werden können. Hierzu können die Drehträgheiten der Antriebsquelle bestimmt werden. Dadurch werden in vorteilhafter Weise zur Schwingungsreduktion auch Trägheitsmomente der jeweiligen Antriebsquellen berücksichtigt, so dass eine noch effizientere Schwingungsreduktion möglich ist.

Gemäß einer Ausführungsform wird die Regelung der Drehzahl auf der Basis der Drehzahlgröße bei einem Überschreiten oder Unterschreiten der Drehzahl der zweiten Antriebsquelle durch die Drehzahl der ersten Antriebsquelle aktiviert. Die Regelung kann beispielsweise aktiviert werden, wenn sich die Drehzahlverläufe der beiden Antriebsquellen kreuzen. Dadurch kann in vorteilhafter Weise ein einfaches Kriterium zur Aktivierung der Regelung herangezogen werden.

Gemäß einer Ausführungsform kann nach Ablauf der Regelung der Drehzahlregelung die Drehzahl auf der Basis der Drehzahl der ersten Antriebsquelle oder der zweiten Antriebsquelle durchgeführt werden. Dabei betrifft die Drehzahlregelung eine Regelung der Drehzahl der ersten Antriebsquelle und/oder eine Regelung der Drehzahl der zweiten Antriebsquelle. Somit kann in vorteilhafter Weise nach einer Ausregelung der Drehzahlschwingungen zu einem Standardregelverfahren zur Regelung der Drehzahl zurückgegriffen werden.

Gemäß einer Ausführungsform wird die Regelung der Drehzahl auf der Basis der Drehzahlgröße nur bis zu einer vorbestimmten Anzahl von Überschreitungen und/oder Unterschreitungen der Drehzahl der zweiten Antriebsquelle durch die Drehzahl erste Antriebsquelle durchgeführt. Somit wird sichergestellt, dass das Verfahren zur Reduktion der Drehzahlschwingungen nur gezielt und für eine begrenzte Zeit eingesetzt wird.

Gemäß einer Ausführungsform wird zur Regelung der Drehzahl eine Differenz zwischen der Drehzahlgröße und einer Soll-Drehzahl bestimmt, so dass die Regelung in vorteilhafter Weise anhand von Standardregelverfahren durchgeführt werden kann.

Gemäß einer Ausführungsform wird zum Aktivieren der Regelung auf der Basis der Drehzahlgröße eine Schwingung der Drehzahl der ersten Antriebsquelle oder der Drehzahl der zweiten Antriebsquelle, beispielsweise ein erstes Überschreiten oder Unterschreiten der Drehzahl der zweiten Antriebsquelle durch die Drehzahl der ersten Antriebsquelle erfasst. Dadurch können in einfacher Weise relative Schwingungen der Drehzahlen der beiden Antriebsquellen, erfasst werden.

Gemäß einem Aspekt betrifft die Erfindung eine programmtechnisch eingerichtete Vorrichtung, beispielsweise ein Steuergerät, welche ausgebildet ist, ein Computerprogramm zum Ausführen des Verfahrens zur Reduktion von Drehzahlschwingungen auszuführen. Die programmtechnisch eingerichtete Vorrichtung kann beispielsweise in Software oder in Hardware implementiert werden.

Weitere Ausführungsbeispiele der Erfindung werden Bezug nehmend auf die beiliegenden Figuren erläutert. Es zeigen:

Fig. 1 einen Triebstrang eines Hybridfahrzeugs;

Fig. 2 einen Verlauf von Drehzahlschwingungen beim Schließen einer Trennkupplung;

Fig. 3 ein Ablaufdiagramm eines Verfahrens zur Schwingungsreduktion;

Fig. 4 eine Mittelwertbildung zur Bestimmung einer Drehzahlgröße; und

Fig. 5 eine Implementierung des Verfahrens zur Drehzahlregelung.

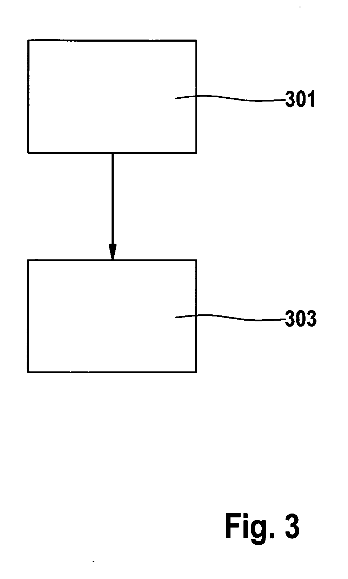

Fig. 3 zeigt einen Ablauf eines Verfahrens zur Drehzahlregelung in einem Hybridantrieb mit einer ersten Antriebsquelle, beispielsweise einem Verbrennungsmotor, und einer zweiten Antriebsquelle, beispielsweise einem Elektromotor. Das Verfahren umfasst den Schritt 301 des Bestimmens einer Drehzahlgröße, welche von einer Drehzahl der ersten Antriebsquelle und/oder von einer Drehzahl der zweiten Antriebsquelle abhängig ist, und den Schritt 303 des Regelns der Drehzahl der ersten Antriebsquelle und/oder der Drehzahl der zweiten Antriebsquelle auf der Basis der Drehzahlgröße.

Zur Bestimmung der Drehzahlgröße kann beispielsweise ein Mittelwert zwischen der Drehzahl der ersten Antriebsquelle und der Drehzahl der zweiten Antriebsquelle gebildet werden. Dieser Mittelwert kann bevorzugt als ein Drehzahl-Istwert für die Regelung verwendet werden. Dadurch ist es beispielsweise möglich, die Drehzahlschwingungen, welche beispielsweise durch eine Bogenfeder der Trennkupplung hervorgerufen werden, zu unterdrücken oder sogar zu vermeiden. Sollte das gesamte Drehzahlniveau bei Berücksichtigung der Drehzahlen der ersten Antriebsquelle und der zweiten Antriebsquelle zu hoch oder zu niedrig sein, so kann das Verfahren dennoch unterstützend eingreifen und das Drehzahlniveau absenken oder anheben. Durch die Verwendung der Drehzahlgröße werden hohe Momentenausschläge des Drehzahlreglers, welche auf die Drehzahlschwingungen zurückzuführen sind, vermieden bzw. reduziert, wodurch der Fahrkomfort steigt.

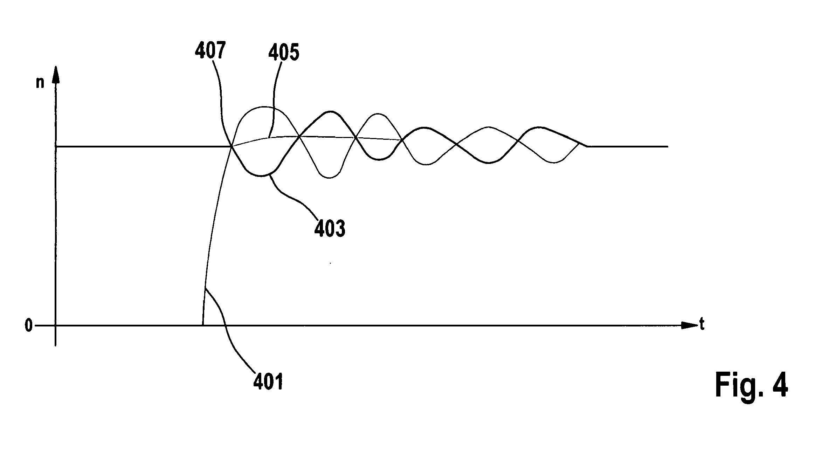

Die Mittelwertbildung kann beispielsweise gezielt aktiviert werden, so dass deren Dauerbetrieb nicht notwendig ist. Eine Möglichkeit zur Aktivierung der Mittelwertbildung besteht darin, beispielsweise eine erste Drehzahlkreuzung zwischen der Drehzahl der ersten Antriebsquelle, beispielsweise des Verbrennungsmotors, und der zweiten Antriebsquelle, beispielsweise des Elektromotors, zu erfassen. Eine Drehzahlkreuzung kann beispielsweise dann erfasst werden, wenn ein Verlauf der Drehzahl der ersten Antriebsquelle einen Verlauf der Drehzahl der zweiten Antriebsquelle kreuzt, wie es beispielsweise in Fig. 4 anhand eines Verlaufs 401 der Drehzahl des Verbrennungsmotors, eines Verlaufs 403 einer Drehzahl eines Elektromotors und anhand eines Verlaufs 405 eines Mittelwertes über beide Drehzahlverläufe, welcher als eine Ist-Drehzahl für einen Regler verwendet wird. Die in Fig. 4 dargestellten Drehzahlkreuzungen 407 können dazu verwendet werden, ein Kriterium für eine Aktivierung der Mittelwertbildung bereitzustellen. Die Mittelwertbildung kann auch für eine beispielsweise parametrierbare Anzahl von Drehzahlkreuzungen 407 aktiv bleiben.

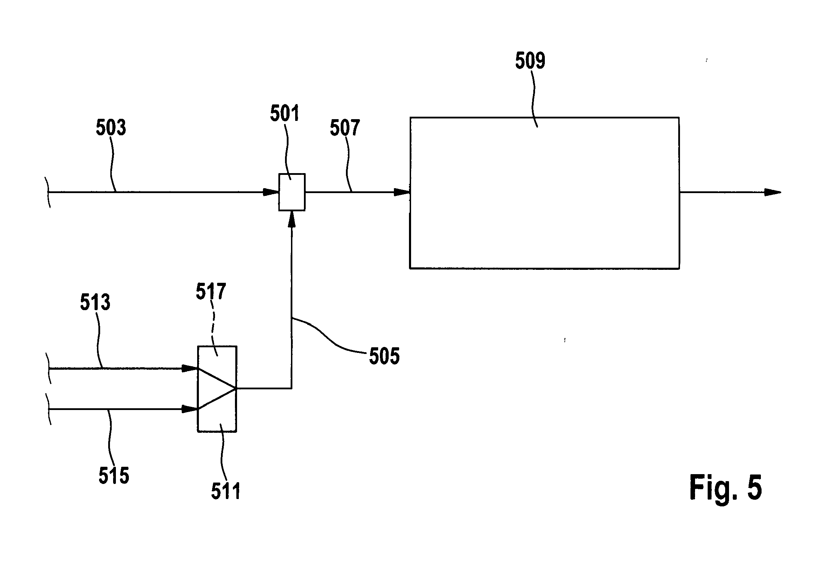

Fig. 5 verdeutlicht eine Implementierung der Drehzahlregelung in Software oder in Hardware, bei der einem Subtraktionselement 501 über einen ersten Eingang 503 eine Soll-Drehzahl und über einen zweiten Eingang 505 eine Ist-Drehzahl zugeführt werden. Eine Differenzdrehzahl wird über einen Ausgang 507 des Subtraktionselementes 501 einem Drehzahlregler zugeführt.

Zum Bestimmen der Ist-Drehzahl ist ferner ein Schaltelement 511 mit einem ersten Eingang 513 und einem zweiten Eingang 515 vorgesehen. Die Eingänge 513 und 515 sind in Abhängigkeit von einem Steuersignal 517 auf einen Ausgang des Schaltelementes 511 schaltbar. So kann beispielsweise an dem ersten Eingang 513 ein Wert angelegt werden, welcher beispielsweise eine Drehzahl des Verbrennungsmotors oder des Elektromotors repräsentiert. An den zweiten Eingang 515 kann hingegen der Mittelwert zwischen den Drehzahlen des Elektromotors und des Verbrennungsmotors angelegt werden. Wird beispielsweise die in Fig. 4 dargestellte Drehzahlkreuzung erfasst, so kann mittels des Steuersignals 517 der Drehzahlmittelwert auf den Ausgang des Schaltelementes 511 geschaltet und als ein Ist-Drehzahlwert verwendet werden. Es ist jedoch möglich, das Steuersignal 517 zum Durchschalten des Drehzahlmittelwertes auf den Ausgang des Schaltelementes 511 nach einer vorbestimmten Anzahl der Schwingungsamplituden zu erzeugen, so dass insgesamt eine Anzahl an Schwingungsamplituden eingestellt werden kann, welche durch die Regelung ignoriert wird.

Zur Berechnung des Mittelwertes kann beispielsweise ein arithmetischer Mittelwert gemäß der Formel

$$n_{Mittel} = (n_{EIM} + n_{Eng})/2$$

bestimmt werden. Darin bezeichnen $n_{mittel}$ den Drehzahlmittelwert, $n_{EIM}$ die Drehzahl des Elektromotors und $n_{Eng}$ die Drehzahl des Verbrennungsmotors. Bei stark unterschiedlichen Drehträgheiten der beiden Antriebsquellen ist es jedoch möglich, die jeweiligen Drehträgheiten bei der Berechnung des Mittelwertes zu berücksichtigen. Dies ist insbesondere von Vorteil, wenn die vorgenannte Bogenfeder beide Antriebsquellen stark anregt, so dass die Antriebsquelle mit der kleineren Trägheit größere Schwingungsamplituden ausführt.

**Patentansprüche**

1. Verfahren zur Drehzahlregelung in einem Hybridantrieb eines Fahrzeugs mit einer ersten Antriebsquelle, insbesondere einem Verbrennungsmotor, und einer zweiten Antriebsquelle, insbesondere einem Elektromotor, mit:

   - Bestimmen (301) einer Drehzahlgröße, welche von einer Drehzahl der ersten Antriebsquellen und einer Drehzahl der zweiten Antriebsquelle abhängig ist, wobei
   - die Drehzahlgröße ein Mittelwert, insbesondere ein arithmetischer oder ein gewichteter Mittelwert, zwischen der Drehzahl der ersten Antriebsquelle und der Drehzahl der zweiten Antriebsquelle ist; und
   - Regeln (303) der Drehzahl der ersten Antriebsquelle oder der Drehzahl der zweiten Antriebsquelle auf der Basis der Drehzahlgröße zur Schwingungsreduktion.

2. Verfahren nach Anspruch 1, **dadurch gekennzeichnet, dass** die Regelung (303) der Drehzahl auf der Basis der Drehzahlgröße beim Einkuppeln, insbesondere beim Einkuppeln mittels einer Trennkupplung, der ersten Antriebsquelle an einen durch die zweite Antriebsquelle angetriebenen Antriebsstrang des Fahrzeugs durchgeführt wird.

3. Verfahren nach einem der vorhergehenden Ansprüche, **dadurch gekennzeichnet, dass** bei der Bestimmung (301) der Drehzahlgröße die Drehzahl der ersten Antriebsquelle mit einer Drehträgheit der ersten Antriebsquelle verknüpft, insbesondere gewichtet, wird, oder wobei die Drehzahl der zweiten Antriebsquelle mit einer Drehträgheit der zweiten Antriebswelle verknüpft, insbesondere gewichtet, wird.

4. Verfahren nach einem der vorhergehenden Ansprüche, **dadurch gekennzeichnet; dass** die Regelung (303) der Drehzahl auf der Basis der Drehzahlgröße bei einem Überschreiten oder Unterschreiten der Drehzahl der zweiten Antriebsquelle durch die Drehzahl der ersten Antriebsquelle aktiviert wird.

5. Verfahren nach einem der vorhergehenden Ansprüche, **dadurch gekennzeichnet, dass** nach Ablauf der Regelung (303) der Drehzahl auf der Basis der Drehzahlgröße die Drehzahl auf der Basis der Drehzahl der ersten Antriebsquelle oder der zweiten Antriebsquelle durchgeführt wird.

**6.** Verfahren nach einem der vorhergehenden Ansprüche, **dadurch gekennzeichnet, dass** die Regelung (303) der Drehzahl auf der Basis der Drehzahlgröße bis zu einer vorbestimmten Anzahl von Überschreitungen und/oder Unterschreitungen der Drehzahl der zweiten Antriebsquelle durch die erste Antriebsquelle durchgeführt wird.

**7.** Verfahren nach einem der vorhergehenden Ansprüche, **dadurch gekennzeichnet, dass** zur Regelung (303) der Drehzahl eine Differenz zwischen der Drehzahlgröße und einer Solldrehzahl bestimmt wird.

**8.** Verfahren nach einem der vorhergehenden Ansprüche, **dadurch gekennzeichnet, dass** zum Aktivieren der Regelung (303) auf der Basis der Drehzahlgröße eine Schwingung der Drehzahl der ersten Antriebsquelle oder der Drehzahl der zweiten Antriebsquelle, insbesondere ein erstes Überschreiten oder Unterschreiten der Drehzahl der zweiten Antriebsquelle durch die Drehzahl der ersten Antriebsquelle, erfasst wird.

**9.** Programmtechnisch eingerichtete Vorrichtung, insbesondere ein Steuergerät, welche ausgebildet ist, ein Computerprogramm zum Ausführen des Verfahrens zur Drehzahlregelung gemäß einem der Ansprüche 1 bis 8 auszuführen.

**Claims**

**1.** Method for regulating a rotational speed in a hybrid drive of a vehicle with a first drive source, in particular an internal combustion engine, and a second drive source, in particular an electric motor, with

- determination (301) of a rotational speed quantity which is dependent on a rotational speed of the first drive source and on a rotational speed of the second drive source,
- the rotational speed quantity being an average value, in particular an arithmetic or weighted average value, between the rotational speed of the first drive source and the rotational speed of the second drive source; and
- regulation (303) of the rotational speed of the first drive source or the rotational speed of the second drive source on the basis of the rotational speed quantity for the purpose of vibration reduction.

**2.** Method according to Claim 1, **characterized in that** the regulation (303) of the rotational speed is carried out on the basis of the rotational speed quantity when the first drive source is coupled, in particular coupled by means of an isolating clutch, to a vehicle drive train driven by the second drive source.

**3.** Method according to one of the preceding claims, **characterized in that**, in the determination (301) of the rotational speed quantity, the rotational speed of the first drive source is linked to, in particular weighted with, a rotational inertia of the first drive source, or the rotational speed of the second drive source is linked to, in particular weighted with, a rotational inertia of the second drive source.

**4.** Method according to one of the preceding claims, **characterized in that** the regulation (303) of the rotational speed is activated on the basis of the rotational speed quantity when the rotational speed of the second drive source is overshot or undershot by the rotational speed of the first drive source.

**5.** Method according to one of the preceding claims, **characterized in that**, after the expiry of the regulation (303) of the rotational speed on the basis of the rotational speed quantity the rotational speed is carried out on the basis of the rotational speed of the first drive source or of the second drive source.

**6.** Method according to one of the preceding claims, **characterized in that** the regulation (303) of the rotational speed is carried out on the basis of the rotational speed quantity up to a predetermined number of overshoots and/or undershoots of the rotational speed of the second drive source by the first drive source.

**7.** Method according to one of the preceding claims, **characterized in that**, for the regulation (303) of the rotational speed, a difference between the rotational speed quantity and a desired rotational speed is determined.

**8.** Method according to one of the preceding claims, **characterized in that**, to activate regulation (303) on the basis of the rotational speed quantity, an oscillation of the rotational speed of the first drive source or of the rotational speed of the second drive source, in particular a first overshoot or undershoot of the rotational speed of the second drive source by the rotational speed of the first drive source, is detected.

**9.** Programming apparatus, in particular control apparatus, which is designed for executing a computer program for carrying out the method for regulating a rotational speed according to one of Claims 1 to 8.

**Revendications**

**1.** Procédé de régulation de la vitesse de rotation dans un entraînement hybride d'un véhicule, comprenant une première source d'entraînement, en particulier un moteur à combustion interne, et une deuxième source d'entraînement, en particulier un moteur électrique, comprenant :

    - déterminer (301) une grandeur de régime qui dépend d'un régime de la première source d'entraînement et d'un régime de la deuxième source d'entraînement,
    - la grandeur de régime étant une valeur moyenne, en particulier une valeur moyenne arithmétique ou pondérée entre le régime de la première source d'entraînement et le régime de la deuxième source d'entraînement ; et
    - réguler (303) le régime de la première source d'entraînement ou le régime de la deuxième source d'entraînement sur la base de la grandeur de régime en vue de réduire les oscillations.

2. Procédé selon la revendication 1, **caractérisé en ce que** la régulation (303) du régime est effectuée sur la base de la grandeur de régime lors de l'accouplement, en particulier lors de l'accouplement au moyen d'un embrayage séparé, de la première source d'entraînement à une chaîne cinématique du véhicule entraînée par la deuxième source d'entraînement.

3. Procédé selon l'une quelconque des revendications précédentes, **caractérisé en ce que** lors de la détermination (301) de la grandeur de régime, le régime de la première source d'entraînement est associé à une inertie de rotation de la première source d'entraînement, notamment est pondéré, ou dans lequel le régime de la deuxième source d'entraînement est associé à une inertie de rotation de la deuxième source d'entraînement, en particulier est pondéré.

4. Procédé selon l'une quelconque des revendications précédentes, **caractérisé en ce que** la régulation (303) du régime est activée sur la base de la grandeur de régime en cas de dépassement par le haut ou par le bas du régime de la deuxième source d'entraînement par le régime de la première source d'entraînement.

5. Procédé selon l'une quelconque des revendications précédentes, **caractérisé en ce qu'**après l'achèvement de la régulation (303) du régime sur la base de la grandeur de régime, le régime est réalisé sur la base du régime de la première source d'entraînement ou de la deuxième source d'entraînement.

6. Procédé selon l'une quelconque des revendications précédentes, **caractérisé en ce que** la régulation (303) du régime est effectuée sur la base de la grandeur de régime jusqu'à un nombre prédéterminé de dépassements par le haut et/ou par le bas du régime de la deuxième source d'entraînement par la première source d'entraînement.

7. Procédé selon l'une quelconque des revendications précédentes, **caractérisé en ce que** pour la régulation (303) du régime, une différence entre la grandeur de régime et un régime de consigne est déterminée.

8. Procédé selon l'une quelconque des revendications précédentes, **caractérisé en ce que** pour l'activation de la régulation (303) sur la base de la grandeur de régime, on détecte une variation du régime de la première source d'entraînement ou du régime de la deuxième source d'entraînement, en particulier un premier dépassement par le haut ou par le bas du régime de la deuxième source d'entraînement par le régime de la première source d'entraînement.

9. Dispositif conçu de manière technique programmable, en particulier appareil de commande, qui est réalisé de manière à exécuter un programme informatique pour mettre en oeuvre le procédé de régulation du régime selon l'une quelconque des revendications 1 à 8.

**Fig. 1**

101 · 103 · 105 · 107 · 109

Fig. 2

301

303

**Fig. 3**

Fig. 4

EP 2 358 555 B1

Fig. 5

EP 2 358 555 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60015820 T2
- EP 0985475 A